# EUROPEAN PATENT APPLICATION

(11) **EP 4 697 467 A1**
(43) Date of publication of application: **18.02.2026**
(21) Application number: 24216603.1
(22) Date of filing: 29.11.2024
(51) Int. Cl.: H01M 50/20, H01M 50/204, H01M 50/207, H01M 50/233, H01M 50/244, H01M 50/251

(54) **BATTERY CLUSTER**

(30) Priority: 14.08.2024 CN 202421980475 U; 30.09.2024 WO PCT/CN2024/122634
(71) Applicant: Eve Energy Storage Co., Ltd., Wuhan Hubei 430200 (CN)
(72) Inventor: Li, Ji, Wuhan, Hubei, 430200 (CN)
(74) Representative: Michalski Hüttermann & Partner Patentanwälte mbB

(57) **Abstract**

Disclosed in the present application is a battery cluster, including a battery insertion case (1) and a battery cabinet body (2). An insertion end of the battery insertion case (1) is provided with a first limiting structure. The battery cabinet body (2) is provided with an insertion opening and at least one slots (22). Inner side walls of each of the at least one slots are provided with a slot track (231) and a guiding rib (232). The battery insertion case (1) is inserted through the insertion opening and slides along the slot track (231), an end of the guiding rib (232) close to the insertion opening is provided with a chamfer, and a second limiting structure (A) corresponding to the first limiting structure is provided in each of the at least one slots at an end away from the insertion opening. When the battery insertion case (1) is completely inserted into one of the at least one slots (22) from the insertion opening, the guiding rib (232) is abutted against two sides of the battery insertion case (1), and the first limiting structure and the second limiting structure (A) are limited and fixed to each other.

## Description

### TECHNICAL FIELD

The present application relates to the technical field of battery energy storage devices, and in particular to a battery cluster.

### BACKGROUND

In a current battery energy storage system or an electric vehicle battery management system, a battery insertion case serves as a key component, and a process of inserting the battery insertion case into a cabinet body of a battery cluster and effectively securing the battery insertion case is critical.

### SUMMARY

Firstly, a battery insertion case in the related art generally lack a limiting and guiding structure when inserted into the cabinet body. It is difficult to accurately align the battery insertion case with a positioning port of the cabinet body during insertion. Generally, the positioning port is located at an opening of the cabinet body, thereby increasing the difficulty of fixing the battery insertion case by a screw. Due to inaccuracy of manual alignment, multiple adjustments or even reinsertions are often needed to ensure that the screw can correctly pass through a preset hole, which not only reduces installation efficiency, but also increases a risk of an operational error, and may result in damage to the battery insertion case or the cabinet body.

Secondly, most cabinet bodies in the related technology use a simple frame-type structure, which reduces the weight and manufacturing cost to some extent, but lacks sufficient support and stability. In particular, after a battery insertion case is pulled out and the screw is fixed, the battery insertion case may still shake inside the cabinet body due to inherent limitations of the frame-type structure. This shaking not only affects the overall stability of the battery system, but may also be exacerbated during transportation of the cabinet body, which causes mechanical stress on the battery case and connection parts, thereby leading to potential safety risks such as breakage, deformation, or short-circuiting.

Provided in the present application is a battery cluster, including a battery insertion case and a battery cabinet body. An end of the battery insertion case is an insertion end, and the insertion end is provided with a first limiting structure. The battery cabinet body is provided with an insertion opening. At least one slots for insertion of the battery insertion case are provided in the battery cabinet body, each of the at least one slots includes two side walls opposite to each other, each of the side walls is provided with a slot track and a guiding rib, the battery insertion case is inserted through the insertion opening and slides along the slot track, an end of the guiding rib close to the insertion opening is provided with a chamfer, and a second limiting structure corresponding to the first limiting structure is provided in each of the at least one slots at an end away from the insertion opening. When the battery insertion case is completely inserted into one of the at least one slots from the insertion opening, the guiding rib is abutted against the two sides of the battery insertion case, and the first limiting structure and the second limiting structure are limited and fixed to each other.

The battery cluster provided by the present application has the following technical effects:
1. Installation precision and efficiency is improved: By means of the slot tracks and the guiding ribs in each of the at least one slots, a clear insertion path and a guiding effect are provided for the battery insertion case, so that the battery insertion case is capable of being inserted smoothly and accurately into the corresponding slot of the battery cabinet body. This greatly reduces the need for multiple adjustments and re-insertions due to inaccurate manual alignment, and improves installation efficiency. In addition, the design of the guiding ribs ensures that the battery insertion case is capable of sliding smoothly during insertion, thereby reducing the risk of damage due to friction and collision, and improving the success rate of installation.
2. Stability is enhanced: When the battery insertion case is completely inserted into the corresponding slot, the guiding ribs are closely abutted against two sides of the battery insertion case, thereby effectively limiting the shaking phenomenon of the battery insertion case in the slot. This stable connection structure improves the stability of the battery insertion case in the slot, and is capable of maintaining good positioning even in a vibration or shock environment. By the first limiting structure and the second limiting structure cooperating with each other, the fixing effect of the battery insertion case in the slot is further enhanced, thereby preventing the battery insertion case from being displaced or falling off during transportation or use, and realizing the double guiding and positioning effect with the guiding rib.
3. Safety is improved: The stable connection structure of the battery case reduces the mechanical stress on the battery case and the connecting parts, and reduces a probability of safety hazards such as a broken plug, a poor contact or a short circuit. The double guiding and fixing design ensures the stability of the battery insertion case during transportation, avoiding damage or fault due to shaking and improving the transportation safety of the battery cluster.
4. Service life is extended: By reducing the risk of damage due to improper installation or shaking, the overall service life of the battery insertion case and battery clusters is extended. The stable connection structure reduces wear and fatigue caused by vibration or shock, further improving the durability of the battery cluster.
5. Maintenance operation is simplified: When the battery insertion case is needed to be maintained or replaced, the stable connection structure and clear disassembly path make the operation easier and faster. The risk of damage or fault due to improper disassembly is reduced, and the maintenance cost and time are reduced.

### BRIEF DESCRIPTION OF THE DRAWINGS

Fig. 1 is a schematic structural diagram of a battery insertion case according to an embodiment of the present application in a perspective view;
Fig. 2 is a schematic structural diagram of the battery cabinet body and the battery insertion case of according to an embodiment of the present application in an exploded view;
Fig. 3 is an enlarged view at area A in Fig. 2;
Fig. 4 is an enlarged view at area B in Fig. 2; and
Fig. 5 is a schematic structural diagram of a battery cabinet body according to an embodiment of the present application in a front view.

The meanings of the attached markings are as follows: 1 battery insertion case, 11 insertion end, 111 first limiting structure, 1111 positioning hole, 12 pull-out end, 121 first fixing structure, 1211 fixing threaded hole, 13 pull-out end plate, 14 insertion end plate, 15 bottom plate, 16 side plate, 17 triangular rib, 2 battery cabinet body, 21 insertion opening, 211 second fixing structure, 2111 fixing stud, 22 slot, 221 second limiting structure, 2211 positioning pin, 23 side wall, 231 slot track, 232 guiding rib, 24 top wall, 25 bottom wall, 26 back plate, 3 fixing screw, 4 baffle plate.

### DETAILED DESCRIPTION

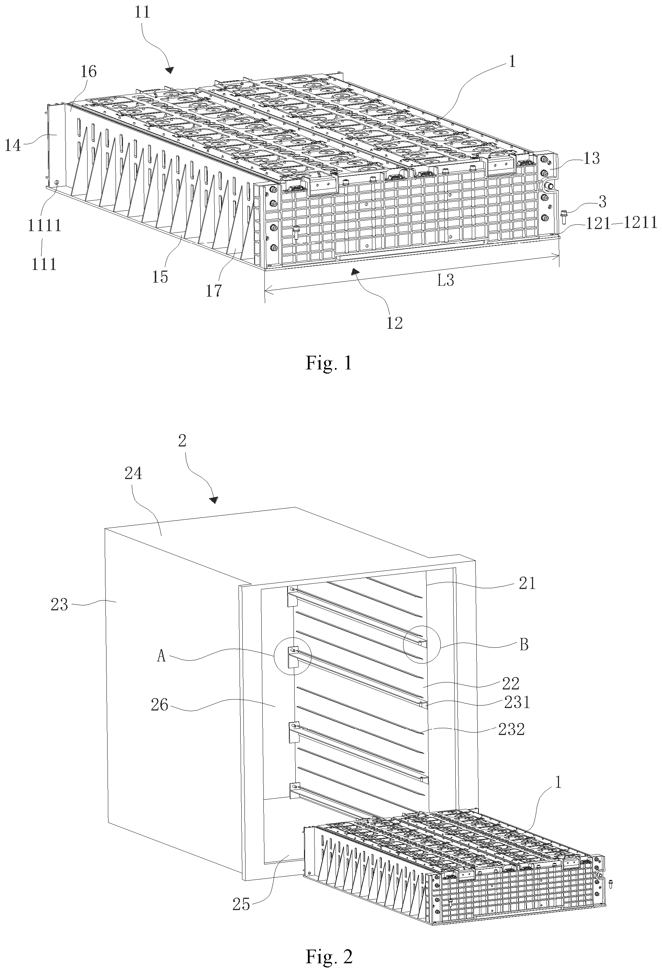

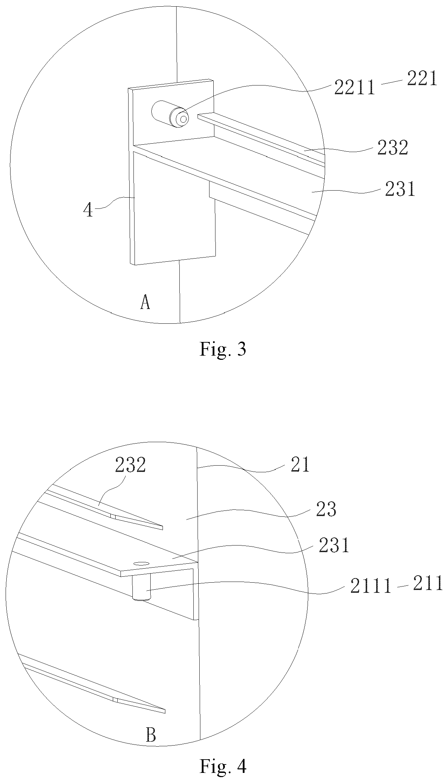

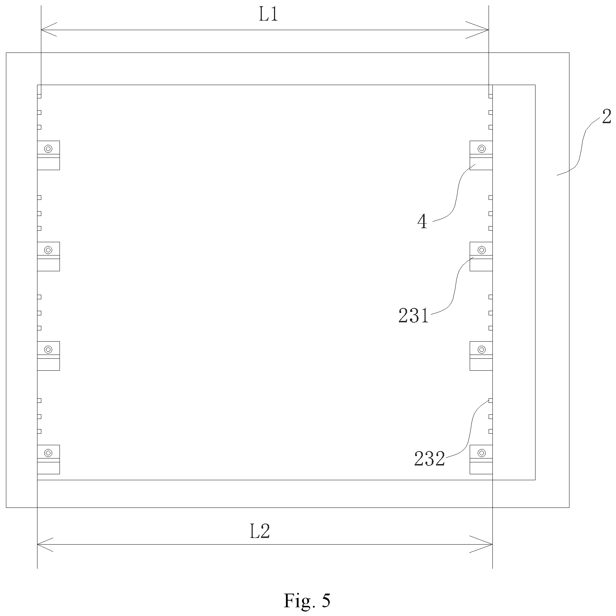

Referring to Figs. 1 to 5, disclosed in a first embodiment of the present application is a battery cluster, including a battery insertion case 1 and a battery cabinet body 2. The battery cabinet body 2 has an insertion opening 21. At least one slots 22 for insertion of the battery insertion case 1 are provided in the battery cabinet body 2, and the at least one slots 22 extend from the insertion opening 21. That is, a ratio of the number of the insertion openings 21 to the number of slots 22 is 1:n, and n ≥ 1. The battery cabinet body 2 is enclosed by a top wall 24, a bottom wall 25, a back plate 26 and two side walls 23, so that there are two side walls 23 for each of the at least one slots 22. Each of the side walls 23 are provided with a slot track 231 and a guiding rib 232 for each of the at least one slots 22, the slot track 231 is configured to be abutted against a bottom of the battery insertion case 1 to act as a support. The guiding rib 232 is configured to limit two sides of the battery insertion case 1. specifically, an end of the battery insertion case 1 is an insertion end 11, and another end of the battery insertion case 1 is a pull-out end 12. A first limiting structure 111 is provided at the insertion end 11. The battery insertion case 1 is inserted into one of the at least one slots 22 from the insertion opening 21 and slides along the slot track 231. An end of the guiding rib 232 close to the insertion opening 21 is provided with a chamfer. A second limiting structure 221 corresponding to the first limiting structure 111 is provided at an end away from the insertion opening 21. It should be noted that the second limiting structure 221 corresponding to the first limiting structure 111 herein refers to that the first limiting structure 111 can be adapted with the second limiting structure 221 to achieve a limiting effect along an insertion direction. When the battery insertion case 1 is completely inserted into the one of the at least one slots 22 from the insertion opening 21, the guiding rib 232 is abutted against the two sides of the battery insertion case 1, and the first limiting structure 111 and the second limiting structure 221 are limited and fixed to each other.

The chamfer of the guiding rib 232 may be beveled or curved, so that the closer the guiding rib 232 is to the insertion opening 21, the smaller a thickness of the guiding rib 232 is. Therefore, a mounting position can be reserved for the insertion end 11 of the battery insertion case 1, so that the battery insertion case 1 can be inserted into the slot 22 smoothly according to a guiding effect of the guiding rib 232, thereby improving the convenience of insertion, and ensuring smoothness of the battery insertion case 1 in an insertion process. A design of the chamfer at the end of the guiding rib 232 close to the insertion opening 21 helps the battery insertion case 1 enter the slot 22 smoothly, reducing friction and collision. When the battery insertion case 1 is completely inserted into the slot 22, the guiding rib 232 is abutted against the two sides of the battery insertion case 1, thereby increasing the stability of the insertion case in the slot 22, reducing a shaking phenomenon, and improving a success rate of alignment of the first limiting structure 111 with the second limiting structure 221.When the first limiting structure 111 and the second limiting structure 221 are successfully limited and fixed to each other, stability can be maintained, and a risk of mechanical stress on the battery insertion case 1 and the connecting parts is reduced, thereby improving transportation safety. By using double guidance and fixation, the overall stability of the battery insertion case 1 is improved after the battery insertion case 1 is inserted, a fixation process is simplified and overall performance and safety of the battery cluster is improved.

In some implementations, one of the first limiting structure 111 and the second limiting structure 221 is a positioning hole 1111, and the other of the first limiting structure 111 and the second limiting structure 221 is a positioning pin 2211. A precise tolerance fit between the positioning hole 1111 and the positioning pin 2211 can ensure that the battery insertion case 1 is capable of achieving high-precision positioning when inserted into the battery cabinet body 2. This positioning method helps to reduce installation problems caused by inaccurate alignment, improve installation efficiency, and also eliminate errors caused by manual operation to ensure that the installation can meet the same accuracy standard. After the positioning pin 2211 is inserted into the positioning hole 1111, a movement freedom degree of the battery insertion case 1 in the slot 22 can be effectively limited, so as to prevent battery insertion case 1 from shaking in a vertical or horizontal direction, and also to prevent the battery insertion case 1 from accidentally falling off when the battery insertion case 1 is subjected to an external force, thereby improving safety and reliability of the entire battery cluster. In some implementations, the battery insertion case 1 includes a pull-out end plate 13, an insertion end plate 14, a bottom plate 15, and two side plates 16. In order to reserve a position of the first limiting structure 111 on the insertion end plate 14, an installed distance between the two side plates 16 is smaller than a width of the bottom plate 15, thus facilitating the pull-out end plate 13, the insertion end plate 14 to be attached and locked to the side plates 16.In addition, a first limiting structure 111 is provided at two ends of the insertion end plate 14. The first limiting structure 111 is a positioning hole 1111. A baffle plate 4 is connected to an end of the slot track 231 away from the insertion opening 21. The baffle plate 4 is abutted against the insertion end 11 of the battery insertion case 1. The baffle plate 4 acting as an end restriction of the slot track 231 ensures that the battery insertion case 1 can only reach a predetermined depth, avoiding collision with the back plate 26 of the battery cabinet body 2. The baffle plate 4 is provided with a second limiting structure 221, and the second limiting structure 221 is a positioning pin 2211.When the battery insertion case 1 is completely inserted, the positioning pin 2211 of the baffle plate 4 is capable of being inserted into the positioning hole 1111 on the insertion end plate 14, while the baffle plate 4 is abutted against the insertion end plate 14 of the battery insertion case 1. In some implementations, in order to avoid a useless space between the side plate 16 and the bottom plate 15, a triangular rib 17 is provided between an outer side of the side plate 16 and the bottom plate 15, so as to improve strength of the battery insertion case 1. Similarly, the pull-out end plate 13 and the insertion end plate 14 may be provided with reinforcement ribs that are transversely and longitudinally staggered in position, and a plurality of groove-like structures may be formed between the reinforcement bars, which is more conducive to receiving and hiding a screw head, and reduces a risk of loosening or damage by collision.

In some implementations, an end of the positioning pin 2211 is provided with a chamfer, and the chamfer of the end of the positioning pin 2211 can reduce a contact area with an entrance of the positioning hole 1111, thereby reducing friction during insertion so as to allow the positioning pin 2211 to enter the positioning hole 1111 more easily and smoothly, and serving as a guide so as to guide the positioning pin 2211 into the positioning hole 1111 in the correct direction, which helps to achieve more accurate positioning. During insertion, a design of the chamfer prevents sharp edges of the positioning pin 2211 from scratching an inner wall of the positioning hole 1111, prevents the positioning hole 1111 from damage, improves installation precision and reliability, and extend its service life.

In some implementations, an axial direction of the positioning hole 1111 and an axial direction of the positioning pin 2211 are parallel to the slot track 231. Since the axial direction of the positioning hole 1111 and the axial direction of the positioning pin 2211 are parallel to the slot track 231, the positioning pin 2211 can smoothly enter the positioning hole 1111 without being subjected to unnecessary resistance or snagging when the battery insertion case 1 is sliding along the slot track 231, thereby ensuring smooth insertion process. More effectively, the movement freedom degree of the battery insertion case 1 in the slot 22 is limited, the shaking of the battery insertion case 1 in the vertical or horizontal direction is reduced, and the structure set in parallel is capable of more uniformly transferring and dispersing a load, thereby improving an overall load-bearing capacity and an impact resistance capacity of the battery cluster.

In some implementations, in order to improve a fixing effect of the battery insertion case 1 after the battery insertion case 1 is inserted, a first fixing structure 121 is provided at the pull-out end 12, and the slot track 231 is provided with a second fixing structure 211 corresponding to the first fixing structure 121. It should be noted that the second fixing structure 211 corresponding to the first fixing structure 121 herein refers to that the second fixing structure 211 can be adapted with the first fixing structure 121, i.e., the two can achieve the fixing effect. The first fixing structure 121 is fixedly connected to the second fixing structure 211, and the first fixing structure 121 are cooperated with the second fixing structure 211, so as to allowing the pull-out end 12 to be fixed at the insertion opening 21, thereby preventing the battery insertion case 1 from sliding out of the insertion opening 21, effectively preventing the battery insertion case 1 from shaking or falling off during transportation, installation, or use, and enhancing overall stability.

In some implementations, one of the first fixing structure 121 and the second fixing structure 211 is a fixing threaded hole 1211, the other end is a fixing stud 2111, and a fixing screw 3 is assembled between the fixing threaded hole 1211 and the fixing stud 2111. A high-strength connection is formed between the fixing threaded hole 1211 and the fixing stud 2111 through a fastening effect of the fixing screw 3. This connection can withstand large tensile and shear forces, ensuring the stability of the battery insertion case 1 within the battery cabinet body 2. The screw locking action can effectively prevent the battery insertion case 1 from loosening due to vibration, impact and other factors during use, thereby improving connection reliability. In addition, installation and dismantling processes of the battery insertion case 1 become relatively simple, thereby reducing the difficulty and cost of maintenance, and improving maintainability of an equipment. The combination structure of the fixing threaded holes 1211, the fixing studs 2111 and the fixing screws 3 is relatively simple and a manufacturing cost is relatively low, which helps to improve product competitiveness. In some implementations, in a recessed slot-like structure on two sides of the pull-out end plate 13, a first fixing structure 121 is provided in a part fitted with the bottom plate 15. The first fixing structure 121 is a fixing hole, and the fixing hole penetrates through the bottom plate 15 and the pull-out end plate 13. A second fixing structure 211 is provided at an end of the slot track 231close to the insertion opening 21. The second fixing structure 211 is the fixing stud 2111. The fixing screw 3 is provided between the fixing hole and the fixing stud 2111, so that the bottom plate 15, the pull-out end plate 13 and the slot track 231 are fixed by the connection of the fixing screw 3, thereby achieving the fixing effect.

In some implementations, the fixing holes of the first fixing structure 121 may be provided at bent parts of two ends of the pull-out end plate 13, and the fixing studs 2111 of the second fixing structure 211 may be provided on the side walls 23 of the battery cabinet body 2, so that the pull-out end plate 13 is fixed with the battery cabinet body 2 by using the fixing screw 3, and achieve the fixing effect. In some implementations, a handle may be provided on the pull-out end plate 13 in order to facilitate the user to pull out the battery insertion case 1.

Therefore, an axial direction of the fixing threaded hole 1211, an axial direction of the fixing stud 2111, and an axial direction of the fixing screw 3 are perpendicular to the slot track 231, which ensures that, when subjected to a lateral force, the battery insertion case 1 can be kept stable and is not easy to be shifted or shaken, thereby reducing looseness and damage caused by vibration. The vertical axis direction enables the installer to clearly recognize a correct installation direction, thus avoiding installation problems caused by a wrong direction. When the battery insertion case 1 is needed to be maintained or replaced, the fixing threaded hole 1211 and the fixing screw 3 provided vertically make the dismantling process simpler and more direct.

In some implementations, a distance between guiding ribs 232 corresponding to two side walls 23 of the slot 22 is set to be L1. It should be noted that the guiding ribs 232 corresponding to two side walls 23 of each of the at least one slots 22 herein refer to two guiding ribs 232 on the two side walls 23 that are located on a same horizontal plane. A distance between two side edges of the insertion opening 21 parallel to the side walls 23 is set to be L2, a length of the insertion end 11 of the battery insertion case 1 or a length of the pull-out end 12 of the battery insertion case 1 is set to be L3, and then it is satisfied: L2 > L1 = L3. Since L1 is equal to L3, when the battery insertion case 1 is inserted into the slot 22, two sides of the battery insertion case 1 slides along the guiding ribs 232 in the slot 22 until it is completely inserted, thus avoiding installation difficulties or damages due to positional deviation. A design in which L2 is larger than L1 provides sufficient space for the insertion of the battery insertion case 1, so as to avoiding jamming phenomena due to over-tightened dimensions. This helps to simplify the installation process and improve installation efficiency. When the battery insertion case 1 is completely inserted into the slot 22, the two sides the battery insertion case 1 is closely matched with the guiding rib 232 in the slot 22, forming a stable connection. This design helps to reduce shaking and displacement of the battery insertion case 1 in the slot 22, improving the reliability of the connection.

It should be noted that, in some implementations, in each of at least one slots 22, at least one battery cases 1 may be provided, and each of the battery insertion cases 1 corresponds to at least two slot tracks 231, i.e., each of the battery insertion cases 1 is subjected to forces of at least two slot tracks 231 located on the same horizontal plane. Two sides of the insertion end 11 and two sides of the pull-out end 12 of the battery insertion case 1 are abutted against at least two of the guiding ribs 232, and in some implementations, abutted against three to four guiding ribs 232. By the support of the at least two slot tracks 231 and the at least two guiding ribs 232, the battery insertion case 1 is more securely supported in the slots 22. This multi-point support structure can significantly improve the stability of the battery insertion case 1 in the slot 22, preventing the battery insertion case 1 from shaking or shifting when subjected to an external force; and a design of the plurality of the slot tracks 231 and the guiding ribs 232 allows the battery insertion case 1 to be uniformly stressed during insertion, avoiding damage caused by excessive stress at a single point. In addition, when the battery insertion case 1 is completely inserted, a weight of the battery insertion case 1 can be better dispersed, reducing a burden on a single support point.

An operation principle of the present application is as follows:
The insertion end 11 of the battery insertion case 1 is inserted towards the slot 22 inside the insertion opening 21, the number of battery insertion plugs that can be installed can be determined according to the number of slots 22. When the insertion end 11 of the battery insertion case 1 is inserted into the insertion opening 21, it is convenient for alignment as L2 is larger than L1, and when the insertion end 11 of the battery insertion case 1 enters the slot 22 and is then guided by the guiding effect of guiding ribs 232, the side plate 16 of the battery insertion case is gradually clamped. When the battery insertion case 1 is completely inserted, the positioning hole 1111 of the insertion end 11 of the battery insertion case 1 is allowed to be connected to the positioning pin 2211 on the baffle plate 4. Due to the chamfer of the end of the positioning pin 2211, a second guiding and positioning effect can be realized, and then the fixing screw 3 passes through the fixing hole and the fixing stud 2111 to further fix the battery insertion case 1.

In summary, a battery cluster provided by the present application has the following technical effects:
1. Installation precision and efficiency is improved: By means of the slot tracks 231 and the guiding ribs 232 in the slot 22, a clear insertion path and a guiding effect are provided for the battery insertion case 1, so that the battery insertion case 1 is capable of being inserted smoothly and accurately into the slot 22 of the battery cabinet body 2. This greatly reduces the need for multiple adjustments and re-insertions due to inaccurate manual alignment, and improves installation efficiency. In addition, the design of the guiding ribs 232 ensures that the battery insertion case 1 is capable of sliding smoothly during insertion, thereby reducing the risk of damage due to friction and collision, and improving the success rate of installation.
2. Stability is enhanced: When the battery insertion case 1 is completely inserted into the slot 22, the guiding ribs 232 are closely abutted against two sides of the battery insertion case 1, thereby effectively limiting the shaking phenomenon of the battery insertion case 1 in the slot 22. This stable connection structure improves the stability of the battery insertion case 1 in the slot 22, and is capable of maintaining good positioning even in a vibration or shock environment. By the first limiting structure 111 and the second limiting structure 221 cooperating with each other, the fixing effect of the battery insertion case 1 in the slot 22 is further enhanced, thereby preventing the battery insertion case 1 from being displaced or falling off during transportation or use, and realizing the double guiding and positioning effect with the guiding rib 232.
3. Safety is improved: The stable connection structure of the battery case 1 reduces the mechanical stress on the battery case 1 and the connecting parts, and reduces a probability of safety hazards such as a broken plug, a poor contact or a short circuit. The double guiding and fixing design ensures the stability of the battery insertion case 1 during transportation, avoiding damage or fault due to shaking and improving the transportation safety of the battery cluster.
4. Service life is extended: By reducing the risk of damage due to improper installation or shaking, the overall service life of the battery insertion case 1 and battery clusters is extended. The stable connection structure reduces wear and fatigue caused by vibration or shock, further improving the durability of the battery cluster.
5. Maintenance operation is simplified: When the battery insertion case 1 is needed to be maintained or replaced, the stable connection structure and clear disassembly path make the operation easier and faster. The risk of damage or fault due to improper disassembly is reduced, and the maintenance cost and time are reduced.

## Claims

1. A battery cluster, comprising:
a battery insertion case (1), wherein an end of the battery insertion case (1) is an insertion end (11), and the insertion end (11) is provided with a first limiting structure (111); and
a battery cabinet body (2), provided with an insertion opening (21), wherein at least one slots (22) for insertion of the battery insertion case (1) are provided in the battery cabinet body (2), each of the at least one slots (22) comprises two side walls (23) opposite to each other, each of the side walls (23) is provided with a slot track (231) and a guiding rib (232), the battery insertion case (1) is inserted through the insertion opening (21) and slides along the slot track (231), an end of the guiding rib (232) close to the insertion opening (21) is provided with a chamfer, and a second limiting structure (221) corresponding to the first limiting structure (111) is provided in each of the at least one slots (22) at an end away from the insertion opening (21),
wherein, when the battery insertion case (1) is completely inserted into one of the at least one slots (22) from the insertion opening (21), the guiding rib (232) is abutted against two sides of the battery insertion case (1), and the first limiting structure (111) and the second limiting structure (221) are limited and fixed to each other.

2. The battery cluster according to claim 1, wherein one of the first limiting structure (111) and the second limiting structure (221) is a positioning hole (1111), and the other of the first limiting structure (111) and the second limiting structure (221) is a positioning pin (2211).

3. The battery cluster according to claim 2, wherein an end of the positioning pin (2211) is provided with a chamfer.

4. The battery cluster according to claim 2, wherein an axial direction of the positioning hole (1111) and an axial direction of the positioning pin (2211) are parallel to the slot track (231).

5. The battery cluster according to claim 1, wherein an end of the battery insertion case (1) opposite to the insertion end (11) is a pull-out end (12), a first fixing structure (121) is provided at the pull-out end (12), the slot track (231) is provided with a second fixing structure (211) corresponding to the first fixing structure (121), and the first fixing structure ( 121) is fixedly connected to the second fixing structure (211).

6. The battery cluster according to claim 5, wherein one of the first fixing structure (121) and the second fixing structure (211) is a fixing threaded hole (1211), the other of the first fixing structure (121) and the second fixing structure (211) is a fixing stud (2111), and a fixing screw (3) is assembled between the fixing threaded hole (1211) and the fixing stud (2111).

7. The battery cluster according to claim 6, wherein an axial direction of the fixing threaded hole (1211), an axial direction of the fixing stud (2111), and an axial direction of the fixing screw (3) are perpendicular to the slot track (231).

8. The battery cluster according to any one of claims 5 to 7, wherein a distance between guiding ribs (232) corresponding to the two side walls (23) of each of the at least one slots (22) is set to be L1, a distance between two side edges of the insertion opening (21) parallel to the side walls (23) is set to be L2, a length of the insertion end (11) of the battery insertion case (1) or a length of the pull-out end (12) of the battery insertion case (1) is set to be L3, and then it is satisfied: L2 > L1 = L3.

9. The battery cluster according to any one of claims 1 to 7, wherein a baffle plate (4) is connected to an end of the slot track (231) away from the insertion opening (21), and the baffle plate (4) is abutted against the insertion end (11) of the battery insertion case (1).

10. The battery cluster according to any one of claims 5 to 7, wherein, in each of the at least one slots (22), the battery insertion case (1) corresponds to at least two slot tracks (231), and two sides of the insertion end (11) and two sides of the pull-out end (12) of the battery insertion case (1) are abutted against at least two of the guiding ribs (232).
